# EUROPÄISCHE PATENTSCHRIFT

(11) **EP 2 615 301 B1**
(45) Veröffentlichungstag und Bekanntmachung des Hinweises auf die Patenterteilung: **05.08.2015**
(21) Anmeldenummer: 12000120.1
(22) Anmeldetag: 10.01.2012
(51) Int. Cl.: F03D 7/02, G01S 17/10, G01S 17/95, F03D 11/00, G01N 21/53

(54) **Verfahren zum Betreiben einer Windenergieanlage, bei dem auf Grundlage meteorologischer Daten eine Vereisungsgefahr ermittelt wird, und Windenergieanlage zur Ausführung des Verfahrens**
Method for operating a wind energy assembly, for which the risk of icing is determined on the basis of meteorological data and wind energy assembly for implementing the method
Procédé de fonctionnement d'une éolienne dans lequel un danger de givre est détecté en raison de données météorologiques, et éolienne destinée à la réalisation du procédé

(43) Veröffentlichungstag der Anmeldung: 17.07.2013
(73) Patentinhaber: Nordex Energy GmbH, 22419 Hamburg (DE)
(72) Erfinder: Renschler, Oskar, 22941 Delingsdorf (DE); Löwe, Astrid, 22301 Hamburg (DE)
(74) Vertreter: Hauck Patentanwaltspartnerschaft mbB

(56) Entgegenhaltungen:
- EP-B1- 0 914 276
- DE-T2- 69 529 183
- GB-A- 2 329 016
- US-A- 5 014 042
- US-A- 5 434 778
- US-A1- 2002 159 060
- US-A1- 2011 089 692

## Beschreibung

Die Erfindung betrifft ein Verfahren zum Betreiben einer Windenergieanlage, bei dem meteorologische Daten erfasst werden und eine Vereisungsgefahr einer Komponente einer Windenergieanlage auf Grundlage der erfassten meteorologischen Daten ermittelt wird.

An einigen Standorten von Windenergieanlagen kommt es aufgrund hoher Luftfeuchtigkeit und Temperaturen um den Gefrierpunkt immer wieder zu einer Vereisung von Komponenten der Windenergieanlage, insbesondere der Rotorblätter. Eine solche Vereisung kann den Betrieb der Windenergieanlage beeinträchtigen, insbesondere die aerodynamische Leistungsfähigkeit der Rotorblätter mindern. Über entsprechende Ertragseinbußen hinaus können aerodynamische Unwuchten resultieren, die die Lebensdauer von Komponenten verringern können.

Somit kann durch eine effektive Enteisung die Lebensdauer und Effizienz einer Windenergieanlage an Standorten erhöht werden, an denen es zu einer Vereisung kommt. Insbesondere zur Enteisung von Rotorblättern können aktive und passive Enteisungssysteme eingesetzt werden. Aktive Enteisungssysteme weisen eine insbesondere elektrisch betriebene Heizeinrichtung auf. Eine solche Heizeinrichtung ist beispielsweise aus der Druckschrift WO 98/53200 A1 bekannt geworden.

Um aktive Enteisungssysteme zielgenau und ohne übermäßigen Energieverbrauch einsetzen zu können, ist es von entscheidender Bedeutung, eine beginnende Eisbildung oder eine Vereisungsgefahr rechtzeitig zu erkennen. Hierzu ist es aus der Druckschrift US 2011/0089692 A1 bekannt geworden, in der Umgebung einer Windenergieanlage die meteorologischen Daten Temperatur, relative Luftfeuchtigkeit und Sonneneinstrahlung zu messen und auf dieser Grundlage eine Vereisungswahrscheinlichkeit zu ermitteln. Bei dem bekannten Verfahren wird außerdem überwacht, ob die Windenergieanlage einen bei der jeweiligen Windgeschwindigkeit erwarteten Leistungswert erreicht. In Abhängigkeit von Leistungsabweichungen und der ermittelten Vereisungsgefahr kann die Windenergieanlage abgeschaltet werden.

Aus den Druckschriften DE 200 08 289 U1 und DE 10 2008 024 380 A1 ist bekannt geworden, bei Windenergieanlagen eine Sichtweite zu messen und bei Unterschreiten einer bestimmten Sichtweite eine Flugbefeuerung bzw. ein akustisches Warngerät zu aktivieren

US-Patent Nr. 5,434,778 betrifft ein Verfahren und eine Vorrichtung zur Messung der Wetterbedingungen einschließlich der meteorologischen Sichtweite. Bei dem bekannten Verfahren wird einerseits die Streuung des Lichts in einem Messvolumen erfasst. Diese Messgrößc wird als scheinbares Niederschlagsvolumen (apparent precipitation volume) bezeichnet. Andererseits wird mit Hilfe eines kapazitiven Sensors eine Niederschlagsmenge (quantity of contairied water) ermittelt. Durch Auswertung des Verhältnisses des scheinbaren Nicderschlagsvolumens und der enthaltenen Wassermenge kann auf den Typ des Nicderschlags geschlossen werden.

US-Patent Nr. 5,014,042 beschreibt ein Eiswarngerät für Flugzeuge. Bei dem bekannten Eiswamgerät wird die Beeinflussung einer Lichtintensität durch unterschiedliches Brechungsverhalten an einer Grenzfläche eines optischen Kanals untersucht, die durch an der Außenseite des Kanals anhaftendes Eis oder Wasser auftritt.

Druckschrift US 2002/0159060 A1 beschreibt eine Vorrichtung zur Bestimmung von Eigenschaften von Wassertröpfchen, die zur Charakterisierung von Vereisungsbedingungen in einem Flugzeug eingesetzt werden soll.

Druckschrift EP 0 914 276 B1 beschreibt eine Enteisungsvorrichtung und ein Enteisungsverfahren für ein Windenergieanlagenrotorblatt. Bei dem bekannten Verfahren werden im Rotorblatt angeordnete Mikrowellengeneratoren zur Erwärmung des Faserverbundmaterials des Rotorblatts verwendet.

Aus der Druckschrift DE 695 29 183 T2 ist bekannt geworden, zur Bestimmung einer Vereisungsgefahr an einem Flugzeug die Konzentration von flüssigem Wasser in der vorbeiströmenden Luft zu ermitteln.

Davon ausgehend ist es die Aufgabe der Erfindung, ein Verfahren zum Betreiben einer Windenergieanlage zur Verfügung zu stellen, mit dem eine Vereisungsgefahr einfach und genau ermittelt werden kann.

Diese Aufgabe wird gelöst durch das Verfahren zum Betreiben einer Windenergieanlage mit den im Anspruch 1 angegebenen Schritten. Vorteilhafte Ausgestaltungen des Verfahrens sind in den sich anschließenden Unteransprüchen angegeben.

Das Verfahren weist die folgenden Schritte auf:
- Erfassen meteorologischer Daten und
- Ermitteln einer Vereisungsgefahr einer Komponente einer Windenergieanlage auf Grundlage der erfassten meteorologischen Daten, wobei
- das Erfassen der meteorologischen Daten das Erfassen einer Sichtweite einschließt und die erfasste Sichtweite beim Ermitteln der Vereisungsgefahr berücksichtigt wird.

Die Erfindung beruht auf der Erkenntnis, dass die bei den aus dem Stand der Technik bekannten Verfahren berücksichtigten meteorologischen Daten Temperatur, relative Luftfeuchtigkeit und Sonneneinstrahlung zwar einen großen Einfluss auf die Vereisungsgefahr haben, jedoch nicht allein dafür maßgeblich sind, ob es tatsächlich zu einer Vereisung kommt. Die Auswertung umfangreicher Messreihen hat gezeigt, dass auf Grundlage der im Stand der Technik berücksichtigten meteorologischen Daten eine zuverlässige Vorhersage nicht möglich ist. Es wurde experimentell ermittelt, dass eine Berücksichtigung der Sichtweite eine genauere Bestimmung der Vereisungsgefahr ermöglicht. Es wird angenommen, dass die Sichtweite rasch abnimmt, wenn sich mit zunehmender Luftfeuchtigkeit unter bestimmten Bedingungen in der Luft Tröpfchen bilden, und dass eine solche Tröpfchenbildung die Vereisungsgefahr stark erhöhen kann.

Das Erfassen der meteorologischen Daten einschließlich der Sichtweite kann am Ort der Windenergieanlage erfolgen, beispielsweise mit Hilfe von an einer Gondel der Windenergieanlage angeordneten Sensoren und/oder Messgeräten. Die meteorologischen Daten umfassen eine Temperatur. Sie können weiterhin eine relative oder absolute Luftfeuchtigkeit, Informationen über einen aktuellen Niederschlag und/oder die Sonneneinstrahlung umfassen. Beim Ermitteln der Vereisungsgefahr werden diese meteorologischen Daten einschließlich der erfassten Sichtweite berücksichtigt.

Die Vereisungsgefahr ist ein Maß dafür, ob mit einer Vereisung der Komponente der Windenergieanlage zu rechnen ist. Es kann sich bei der Vereisungsgefahr um eine einfache ja/nein-Information handeln oder um eine quantitative Größe, die einer Wahrscheinlichkeit für eine Vereisung entspricht. Im letztgenannten Fall können mit der Ermittlung einer Vereisungsgefahr verbundene Schritte, wie beispielsweise das Inbetriebnehmen einer Heizung, an das Überschreiten eines bestimmten Wahrscheinlichkeitswerts geknüpft sein.

Nach einer gängigen meteorologischen Definition handelt es sich bei der Sichtweite um eine größte Entfernung, in welcher bestimmte Objekte gerade noch erkannt werden können. Diese Definition hängt somit von zahlreichen Randbedingungen und subjektiven Eigenschaften des Beobachters ab. Sie kann jedoch objektiviert werden, indem sie insbesondere auf den sogenannten Extinktionskoeffizienten der Luft zurückgeführt wird. Zur Messung der Sichtweite können handelsübliche Messgeräte eingesetzt werden.

In einer Ausgestaltung ist die Sichtweite eine horizontale Sichtweite. Diese wird auch als meteorologische Sichtweite bezeichnet. Sie ist definiert als die größte horizontale Entfernung, in welcher dunkle Objekte in Erdbodennähe gerade noch erkannt werden können, wobei das Objekt zweifelsfrei identifiziert werden können soll. Davon abweichend wird unter der horizontalen Sichtweite hier nicht notwendigerweise die Sichtweite in Bodennähe verstanden, sondern lediglich eine mit einer Messstrecke in Horizontalrichtung bestimmte Sichtweite. Für die Messung dieser horizontalen Sichtweite gibt es handelsübliche Messgeräte. Bei der Erfindung kann ein solches Messgerät beispielsweise an einer Gondel der Windenergieanlage, in Bodennähe oder in einer davon abweichenden, vorgegebenen Höhe angeordnet werden.

In einer Ausgestaltung ist die Sichtweite eine vertikale Sichtweite. Nach der meteorologischen Definition ist die vertikale Sichtweite, auch als Vertikalsicht bezeichnet, die größte Entfernung, in der vom Boden aus in vertikaler Richtung dunkle Objekte von ausreichender Größe vor dem hellen Himmel als Hintergrund gerade noch erkannt werden können. Abweichend von dieser Definition wird hier unter der vertikalen Sichtweite eine beliebige Sichtweite verstanden, die unter Verwendung einer Messstrecke in Vertikalrichtung gemessen wird. Auch hierfür gibt es handelsübliche Messgeräte, die für die Erfindung beispielsweise an einer Gondel der Windenergieanlage, in Bodennähe oder in einer davon abweichenden vorgegebenen Höhe angeordnet werden können.

In einer Ausgestaltung schließt das Erfassen der meteorologischen Daten das Erfassen einer lokalen Temperatur nahe der Komponente der Windenergieanlage ein. Grundsätzlich kann eine für das Ermitteln der Vereisungsgefahr berücksichtigte Temperatur auch in einer Umgebung der Windenergieanlage gemessen werden, beispielsweise in einer Wetterstation auf dem Boden oder an einer Gondel der Windenergieanlage. Das Erfassen einer lokalen Temperatur in der Nähe der Komponente, deren Vereisungsgefahr ermittelt werden soll, kann jedoch zu genaueren Ergebnissen führen, insbesondere weil lokale Temperaturänderungen aufgrund des Betriebs der Windenergieanlage berücksichtigt werden. Beispielsweise kann die Vereisungsgefahr von Komponenten nahe eines Maschinenhauses der Windenergieanlage durch Wärmeentwicklung vom Generator oder vom Getriebe herabgesetzt sein. Insbesondere im Bereich der Rotorblätter kommt es hingegen aufgrund von Unterdruckbildung durch die Umströmung der Rotorblätter in der Regel zu deutlich geringeren Temperaturen, als in einem größeren Abstand der Rotorblätter. Eine Messung dieser lokalen Temperatur berücksichtigt derartige Effekte und führt daher zu einer genaueren Ermittlung der Vereisungsgefahr. Weitere berücksichtigte meteorologische Daten, etwa eine absolute oder relative Luftfeuchtigkeit oder auch die Sichtweite, können bevorzugt an einem zentralen Ort erfasst werden.

In einer Ausgestaltung schließt das Erfassen der meteorologischen Daten das Erfassen einer Oberflächentemperatur der Komponente der Windenergieanlage ein. Das Erfassen der Oberflächentemperatur kann beispielsweise mit einem Temperatursensor erfolgen, der in unmittelbarem, thermischen Kontakt mit der Oberfläche steht. In bestimmten Situationen kann die lokale Oberflächentemperatur von der Lufttemperatur selbst in unmittelbarer Nähe der Oberfläche abweichen, beispielsweise bei starker Sonneneinstrahlung. Für einen Ansatz von Eis an der Oberfläche ist die Oberflächentemperatur maßgeblich, sodass durch deren Erfassung die Ermittlung der Vereisungsgefahr besonders präzise erfolgen kann.

In einer Ausgestaltung wird bei Ermittlung einer Vereisungsgefahr eine Heizeinrichtung für die Komponente der Windenergieanlage aktiviert. Dabei kann es sich beispielsweise um eine Rotorblattheizung handeln. Die Heizeinrichtung kann insbesondere elektrisch betrieben sein.

In einer Ausgestaltung wird bei Ermittlung einer Vereisungsgefahr die Windenergieanlage abgeschaltet. Durch diese einfache Maßnahme kommt es zwar zu Ertragseinbußen, aber eine Schädigung der Anlage durch Vereisung oder eine Gefährdung von Personen in der Nähe der Windenergieanlage durch herabfallendes Eis kann verhindert werden. Diese Lösung bietet sich insbesondere für Standorte an, an denen es nur sehr selten zu einer Vereisungsgefahr kommt.

In einer Ausgestaltung steigt die ermittelte Vereisungsgefahr bei Temperaturen um den Gefrierpunkt mit abnehmender Sichtweite. Dass die Sichtweite bei der Ermittlung der Vereisungsgefahr berücksichtigt wird, heißt nicht, dass eine Änderung der Sichtweite notwendigerweise einen Einfluss auf die ermittelte Vereisungstemperatur hat. Beispielsweise besteht bei Temperaturen oberhalb eines bestimmten, kritischen Werts, der häufig mit 4 °C angesetzt wird, in der Regel unabhängig von der Sichtweite keine Vereisungsgefahr. Bei Temperaturen um den Gefrierpunkt kann die erfasste Sichtweite bei dem erfindungsgemäßen Verfahren jedoch einen entscheidenden Einfluss auf die ermittelte Vereisungsgefahr haben, insbesondere derart, dass bei ansonsten unveränderten meteorologischen Daten im Falle einer hohen Sichtweite noch keine, im Falle einer geringen Sichtweite jedoch eine erhebliche Vereisungsgefahr besteht.

Die oben angegebene Aufgabe wird ebenfalls gelöst durch die Windenergieanlage mit den Merkmalen des Anspruchs 9. Vorteilhafte Ausgestaltungen sind in den sich anschließenden Unteransprüchen angegeben.

Die Windenergieanlage hat
- mindestens einen Sensor zur Erfassung meteorologischer Daten und
- eine Steuerung, die zur Ermittlung einer Vereisungsgefahr einer Komponente der Windenergieanlage auf Grundlage der erfassten meteorologischen Daten ausgebildet ist, wobei
- ein Sichtweitenmessgerät vorhanden und die Steuerung dazu ausgebildet ist, bei der Ermittlung der Vereisungsgefahr eine von dem Sichtweitenmessgerät erfasste Sichtweite zu berücksichtigen.

Zur Erläuterung der Merkmale und Vorteile der Windenergieanlage wird auf die vorstehenden Erläuterungen des erfindungsgemäßen Verfahrens verwiesen, die entsprechend gelten. Die Windenergieanlage ist insbesondere zur Ausführung des erfindungsgemäßen Verfahrens vorgesehen. Durch die Berücksichtigung der von dem Sichtweitenmessgerät erfassten Sichtweite bei der Ermittlung der Vereisungsgefahr kann die Genauigkeit bei der Ermittlung der Vereisungsgefahr auf einfache Weise verbessert werden.

In einer Ausgestaltung ist das Sichtweitenmessgerät zur Messung einer horizontalen und/oder vertikalen Sichtweite ausgebildet. Grundsätzlich kann die Sichtweite jedoch in einer beliebigen Orientierung gemessen werden.

In einer Ausgestaltung weist das Sichtweitenmessgerät eine Lichtquelle und einen Streulichtdetektor auf. Die Lichtquelle kann Licht insbesondere im nicht sichtbaren Bereich aussenden, wobei der Streulichtdetektor auf den Wellenlängenbereich der Lichtquelle abgestimmt ist. Auf diese Weise können Störeinflüsse durch Tageslicht oder sonstige Lichtquellen minimiert werden. Der Streulichtdetektor erfasst von der Lichtquelle ausgesendetes Licht, nachdem dieses in der Luft gestreut worden ist, insbesondere an in der Luft befindlichen Partikeln wie Staub oder sonstigen Verunreinigungen oder Wassertröpfchen, etwa bei Dunst oder Nebel. Der Streulichtdetektor kann bezüglich der Lichtquelle so angeordnet sein, dass er im Wesentlichen in Vorwärtsrichtung gestreutes Licht detektiert. Alternativ kann auch rückgestreutes Licht erfasst werden.

In einer Ausgestaltung weist das Sichtweitenmessgerät ein LIDAR-System auf. LIDAR ist die englische Abkürzung für *light detection and ranging.* Bei diesem Messverfahren wird vor einer Lichtquelle, insbesondere einem Laser, Licht ausgesendet, insbesondere in Form von Pulsen. Das zurückgestreute Licht wird detektiert und die Signallaufzeit wird ausgewertet. Derartige Systeme sind einerseits zur Entfernungsmessung bekannt, insbesondere auch zur Messung einer Wolkenhöhe. Es ist jedoch mit derartigen Systemen ebenfalls möglich, atmosphärische Parameter einschließlich der Sichtweite, insbesondere der vertikalen Sichtweite, zu ermitteln. Darum sind LIDAR-Systeme für die Erfindung geeignet.

In einer Ausgestaltung ist ein Temperatursensor nahe der Komponente der Windenergieanlage angeordnet. Er kann sich beispielsweise in einem Abstand von weniger als 10 cm, weniger als 1 cm oder weniger als 1 mm von der Komponente der Windenergieanlage, beispielsweise einer Oberfläche eines Rotorblatts, befinden. Hierzu wird auf die vorstehenden Erläuterungen des entsprechenden Verfahrensmerkmals verwiesen.

In einer Ausgestaltung ist ein Temperatursensor so angeordnet, dass er eine Oberflächentemperatur der Komponente der Windenergieanlage misst. Auch hierzu wird auf die vorstehenden Erläuterungen des entsprechenden Verfahrens verwiesen.

In einer Ausgestaltung weist die Windenergieanlage eine Heizeinrichtung auf und die Steuerung ist dazu ausgebildet, bei Ermittlung einer Vereisungsgefahr die Heizeinrichtung zu aktivieren. Auch hierzu wird auf die vorstehenden Erläuterungen verwiesen.

Nachfolgend wird die Erfindung anhand eines in einer Figur dargestellten Ausführungsbeispiels näher erläutert.

Die einzige Figur zeigt schematisch vereinfacht eine erfindungsgemäße Windenergieanlage 10, die einen nur ausschnittsweise dargestellten Turm 12, einen Rotor 14 mit im Wesentlichen horizontaler Achse und drei Rotorblättern 16 sowie einer Rotornabe 18 aufweist. Außerdem hat die Windenergieanlage 10 eine Gondel 20, in der eine Steuerung 22 angeordnet ist. Die Steuerung 22 kann ein Teil der zentralen Betriebsführung sein.

Außerdem hat die Windenergieanlage 10 einen Sensor zur Erfassung meteorologischer Daten. Im gezeigten Ausführungsbeispiel handelt es sich dabei um einen auf der Gondel 20 angeordneten Feuchtesensor 24, der die relative Luftfeuchtigkeit erfasst. Ein weiterer Sensor zur Erfassung meteorologischer Daten ist der Temperatursensor 26, der an einem Rotorblatt 16 angeordnet ist und eine Oberflächentemperatur des Rotorblatts misst. Zu diesem Zweck steht der Temperatursensor 26 in thermischem Kontakt mit der Oberfläche des Rotorblatts 16. Der Feuchtesensor 24 ist über eine elektrische Leitung mit der Steuerung 22 verbunden. Der Temperatursensor 26 ist ebenfalls über eine elektrische Leitung, die einen Schleifring aufweisen kann, mit der Steuerung 22 verbunden.

Auf der Gondel 20 der Windenergieanlage 10 ist weiterhin ein Sichtweitenmessgerät 28 angeordnet, das über eine elektrische Leitung mit der Steuerung 22 verbunden ist und die meteorologische Sichtweite, d.h. die horizontale Sichtweite, auf Höhe der Gondel 20 erfasst.

Über eine elektrische Leitung 30 ist die Steuerung 22 mit an den Rotorblättern 16 angeordneten Heizelementen 32 verbunden.

Die Steuerung 22 wertet die von dem Temperatursensor 26 erfasste Temperatur, die von dem Feuchtemessgerät 24 erfasste relative Luftfeuchtigkeit und die von dem Sichtweitenmessgerät 28 erfasste Sichtweite aus und ermittelt auf Grundlage dieser Daten eine Vereisungsgefahr. Im Beispiel bezieht sich diese Vereisungsgefahr auf die Rotorblätter 16.

Das Sichtweitenmessgerät 28 weist eine nur schematisch angedeutete Lichtquelle 34 und einen Lichtdetektor 36 auf, der das in Vorwärtsrichtung gestreute Licht der Lichtquelle 34 detektiert.

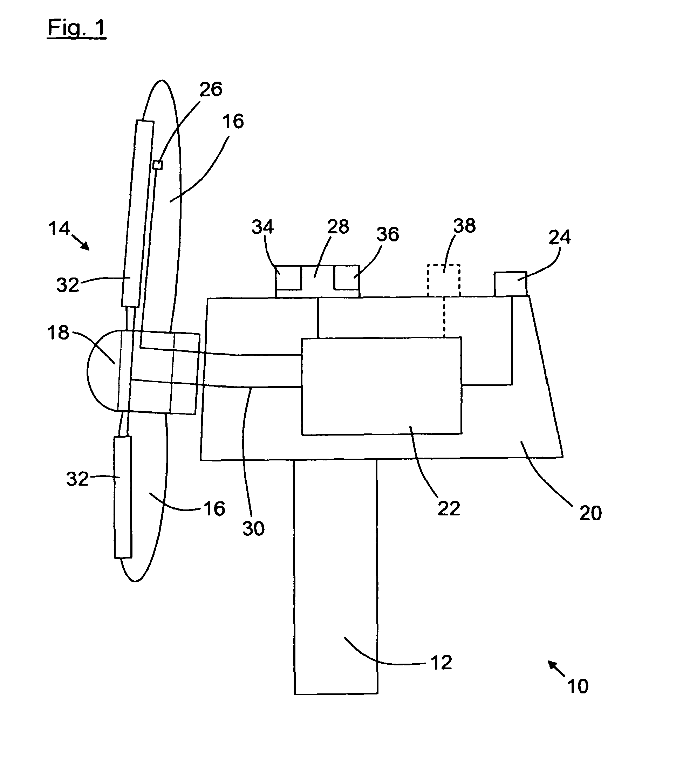

Als Alternative zu dem Sichtweitenmessgerät 28, das die meteorologische oder horizontale Sichtweite erfasst, ist in der Figur 1 gestrichelt ein weiteres Sichtweitenmessgerät 38 angedeutet, das ein LIDAR-System aufweist und die Vertikalsicht erfasst. Auch dieses ist über eine Leitung mit der Steuerung 22 verbunden.

### Liste der verwendeten Bezugszeichen

- 10: Windenergieanlage
- 12: Turm
- 14: Rotor
- 16: Rotorblatt
- 18: Rotornabe
- 20: Gondel
- 22: Steuerung
- 24: Feuchtesensor
- 26: Temperatursensor
- 28: Sichtweitenmessgerät
- 30: elektrische Leitung
- 32: Heizeinrichtung
- 34: Lichtquelle
- 36: Streulichtdetektor
- 38: Sichtweitenmessgerät (LIDAR-System)

## Patentansprüche

1. Verfahren zum Betreiben einer Windenenergieanlage (10) mit den Schritten:
• Erfassen meteorologischer Daten und
• Ermitteln einer Vereisungsgefahr einer Komponente der Windenergieanlage (10) auf Grundlage der erfassten meteorologischen Daten, **dadurch gekennzeichnet, dass**
• das Erfassen der meteorologischen Daten das Erfassen einer Sichtweite mit einem Sichtweitenmessgerät (28), das eine Lichtquelle (34) und einen Streulichtdetektor (36) aufweist, einschließt und die erfasste Sichtweite beim Ermitteln der Vereisungsgefahr berücksichtigt wird.

2. Verfahren nach Anspruch 1, **dadurch gekennzeichnet, dass** die Sichtweite eine horizontale Sichtweite ist.

3. Verfahren nach Anspruch 1 oder 2, **dadurch gekennzeichnet, dass** die Sichtweite eine vertikale Sichtweite ist.

4. Verfahren nach einem der Ansprüche 1 bis 3, **dadurch gekennzeichnet, dass** das Erfassen der meteorologischen Daten das Erfassen einer lokalen Temperatur nahe der Komponente der Windenergieanlage (10) einschließt.

5. Verfahren nach einem der Ansprüche 1 bis 4, **dadurch gekennzeichnet, dass** das Erfassen der meteorologischen Daten das Erfassen einer Oberflächentemperatur der Komponente der Windenergieanlage (10) einschließt.

6. Verfahren nach einem der Ansprüche 1 bis 5, **dadurch gekennzeichnet, dass** bei Ermittlung einer Vereisungsgefahr eine Heizeinrichtung (32) für die Komponente der Windenergieanlage (10) aktiviert wird.

7. Verfahren nach einem der Ansprüche 1 bis 6, **dadurch gekennzeichnet, dass** bei Ermittlung einer Vereisungsgefahr die Windenergieanlage (10) abgeschaltet wird.

8. Verfahren nach einem der Ansprüche 1 bis 7, **dadurch gekennzeichnet, dass** die ermittelte Vereisungsgefahr bei Temperaturen um den Gefrierpunkt mit abnehmender Sichtweite steigt.

9. Windenergieanlage (10) mit
• mindestens einem Sensor zur Erfassung meteorologischer Daten und
• einer Steuerung (22), die zur Ermittlung einer Vereisungsgefahr einer Komponente der Windenergieanlage (10) auf Grundlage der erfassten meteorologischen Daten ausgebildet ist, **gekennzeichnet durch**
• ein Sichtweitenmessgerät (28, 38), das eine Lichtquelle (34) und einen Streulichtdetektor (36) aufweist, und **dadurch**, dass die Steuerung (22) dazu ausgebildet ist, bei der Ermittlung der Vereisungsgefahr eine von dem Sichtweitenmessgerät (28, 38) erfasste Sichtweite zu berücksichtigen.

10. Windenergieanlage nach Anspruch 9, **dadurch gekennzeichnet, dass** das Sichtweitenmessgerät (28, 38) zur Messung einer horizontalen und/oder vertikalen Sichtweite ausgebildet ist.

11. Windenergieanlage nach Anspruch 9 oder 10, **dadurch gekennzeichnet, dass** das Sichtweitenmessgerät (38) ein LIDAR-System aufweist.

12. Windenergieanlage (10) nach einem der Ansprüche 9 bis 11, **dadurch gekennzeichnet, dass** ein Temperatursensor (26) nahe der Komponente der Windenergieanlage (10) angeordnet ist.

13. Windenergieanlage (10) nach einem der Ansprüche 9 bis 12, **dadurch gekennzeichnet, dass** ein Temperatursensor (26) so angeordnet ist, dass er eine Oberflächentemperatur der Komponente der Windenergieanlage (10) misst.

14. Windenergieanlage nach einem der Ansprüche 9 bis 13, **dadurch gekennzeichnet, dass** die Windenergieanlage (10) eine Heizeinrichtung (32) aufweist und die Steuerung (22) dazu ausgebildet ist, bei Ermittlung einer Vereisungsgefahr die Heizeinrichtung (32) zu aktivieren.

## Claims

1. A method for operating a wind turbine (10) with the steps:
• capturing meteorological data and
• determining the risk of icing of a component of the wind turbine (10) on the basis of captured meteorological data, **characterized in that**
• the capturing of the meteorological data includes the capturing of a visual range with a visual range measuring device (28), which has a light source (34) and a light scattering detector (36), and the captured visual range is taken into consideration when determining the risk of icing.

2. The method according to claim 1, **characterized in that** the visual range is a horizontal visual range.

3. The method according to claim 1 or 2, **characterized in that** the visual range is a vertical visual range.

4. The method according to one of claims 1 to 3, **characterized in that** the capturing of the meteorological data includes the capturing of a local temperature near the component of the wind turbine (10).

5. The method according to one of claims 1 to 4, **characterized in that** the capturing of the meteorological data includes the capturing of a surface temperature of the component of the wind turbine (10).

6. The method according to one of claims 1 to 5, **characterized in that** a heating device (32) for the component of the wind turbine (10) is activated when a risk of icing is determined.

7. The method according to one of claims 1 to 6, **characterized in that** the wind turbine (10) is shut down when a risk of icing is determined.

8. The method according to one of claims 1 to 7, **characterized in that** the determined risk of icing increases with a decreasing visual range at temperatures around the freezing point.

9. A wind turbine (10) with
• at least one sensor for capturing meteorological data and
• a controller (22) for determining a risk of icing of a component of the wind turbine (10) on the basis of the captured meteorological data, **characterized by**
• a visual range measuring device (28, 38), which has a light source (34) and a light scattering detector (36), and in that the controller (22) is designed to take a visual range captured by the visual range measuring device (28, 38) into consideration when determining the risk of icing.

10. The wind turbine (10) according to claim 9, **characterized in that** the visual range measuring device (28, 38) is designed to measure a horizontal and/or vertical visual range.

11. The wind turbine (10) according to claim 9 or 10, **characterized in that** the visual range measuring device (38) has a LIDAR system.

12. The wind turbine (10) according to one of claims 9 to 11, **characterized in that** a temperature sensor (26) is arranged near the component of the wind turbine (10).

13. The wind turbine (10) according to one of claims 9 to 12, **characterized in that** a temperature sensor (26) is arranged such that it measures a surface temperature of the component of the wind turbine (10).

14. The wind turbine (10) according to one of claims 9 to 13, **characterized in that** the wind turbine (10) has a heating device (32) and the controller (22) is designed to activate the heating device (32) when a risk of icing is determined.

## Revendications

1. Procédé de fonctionnement d'une éolienne (10), avec les étapes suivantes :
• collection de données météorologiques, et
• détection d'un danger de givre menaçant un composant de l'éolienne (10), sur la base des données météorologiques collectées, **caractérisé en ce que**
• la collection des données météorologiques comprend la collection d'une visibilité avec un appareil de mesure de visibilité (28) présentant une source de lumière (34) et un détecteur de lumière diffusée (36), et la visibilité collectée est prise en compte lors de la détection du danger de givre.

2. Procédé selon la revendication 1, **caractérisé en ce que** la visibilité est une visibilité horizontale.

3. Procédé selon la revendication 1 ou 2, **caractérisé en ce que** la visibilité est une visibilité verticale.

4. Procédé selon l'une des revendications 1 à 3, **caractérisé en ce que** la collection des données météorologiques comprend la collection d'une température locale à proximité des composants de l'éolienne (10).

5. Procédé selon l'une des revendications 1 à 4, **caractérisé en ce que** la collection des données météorologiques comprend la collection d'une température de surface des composants de l'éolienne (10).

6. Procédé selon l'une des revendications 1 à 5, **caractérisé en ce que** lors de la détection d'un danger de givre, un dispositif de chauffage (32) est activé pour les composants de l'éolienne (10).

7. Procédé selon l'une des revendications 1 à 6, **caractérisé en ce que** lors de la détection d'un danger de givre, l'éolienne (10) est arrêtée.

8. Procédé selon l'une des revendications 1 à 7, **caractérisé en ce que** le danger de givre détecté augmente avec des températures avoisinant le point de congélation avec une visibilité en baisse.

9. Éolienne (10) avec
• au moins un capteur pour la collection de données météorologiques, et
• une commande (22) conçue pour détecter un danger de givre menaçant un composant de l'éolienne (10), sur la base des données météorologiques collectées, **caractérisée par**
• un appareil de mesure de visibilité (28, 38) présentant une source de lumière (34) et un détecteur de lumière diffusée (36), et en ce que la commande (22) est conçue pour tenir compte d'une visibilité collectée par l'appareil de mesure de visibilité (28, 38), lors de la détection du danger de givre.

10. Éolienne selon la revendication 9, **caractérisée en ce que** l'appareil de mesure de visibilité (28, 38) est conçu pour mesurer une visibilité horizontale et/ou verticale.

11. Éolienne selon la revendication 9 ou 10, **caractérisée en ce que** l'appareil de mesure de visibilité (38) présente un système LIDAR.

12. Éolienne (10) selon l'une des revendications 9 à 11, **caractérisée en ce qu'**un capteur de température (26) est installé à proximité des composants de l'éolienne (10).

13. Éolienne (10) selon l'une des revendications 9 à 12, **caractérisée en ce qu'**un capteur de température (26) est installé de manière à mesurer une température de surface des composants de l'éolienne (10).

14. Éolienne selon l'une des revendications 9 à 13, **caractérisée en ce que** l'éolienne (10) présente un dispositif de chauffage (32), et la commande (22) est conçue pour activer le dispositif de chauffage (32) lors de la détection d'un danger de givre.
